# EUROPÄISCHE PATENTSCHRIFT

(11) **EP 2 034 054 B1**
(45) Veröffentlichungstag und Bekanntmachung des Hinweises auf die Patenterteilung: **15.06.2011**
(21) Anmeldenummer: 07115949.5
(22) Anmeldetag: 07.09.2007
(51) Int. Cl.: C25D 3/60, C25D 7/04, E03B 7/09, F16K 1/00, F16L 1/00

(54) **Verfahren zur Herstellung eines beschichteten Bauteils für fluidführende Gewerke und beschichtetes Bauteil**
Method for manufacturing a coated components for fluid carrying assembly sections and coated component
Procédé destiné à la fabrication d'un composant revêtu pour des corps transportant du fluide et composant revêtu

(43) Veröffentlichungstag der Anmeldung: 11.03.2009
(73) Patentinhaber: VIEGA GmbH & Co. KG, 57439 Attendorn (DE)
(72) Erfinder: Arens, Peter, 57439 Attendorn (DE); Rischen, Christian, 59889 Eslohe (DE)
(74) Vertreter: Cohausz & Florack

(56) Entgegenhaltungen:
- EP-A- 0 915 183
- EP-A- 1 816 383
- JP-A- 5 125 584
- JP-A- 6 193 758
- JP-A- 58 129 198
- US-A- 3 772 168
- M. CLARKE, S.C. BRITTON: "Passivity of electrodepositied tin-nickel alloy and intermetallic tin compounds" CORROSION SCIENCE, Bd. 3, 1963, Seiten 207-216, XP002462445 Great Britain
- JALOTA S.K.: 'Tin-nickel alloy plating' METAL FINISHING, ELSEVIER, NEW YORK, NY, US Bd. 99, 01 Januar 2001, Seiten 320 - 323, XP004663822 ISSN: 0026-0576

## Beschreibung

Die Erfindung betrifft ein Verfahren zur Herstellung eines beschichteten Bauteils für fluidführende Gewerke. Weiterhin betrifft die Erfindung ein beschichtetes Bauteil für fluidführende Gewerke.

Aus dem Stand der Technik ist bekannt, Bauteile für fluidführende Gewerke aus Kupferlegierungen oder auch anderen Metalllegierungen herzustellen. Solche Legierungen können jedoch migrierende Bestandteile, beispielsweise Blei, Nickel oder Kupfer selbst, aufweisen. Migrieren solche Bestandteile in das in dem Bauteil geführte Fluid, kann dadurch die Güte des Fluids beeinträchtigt werden. Für die Anwendung von Bauteilen für trinkwasserführende Gewerke beispielsweise sind zum Schutz der Gesundheit gesetzliche Normen in Kraft, die Höchstgrenzen für die Migrationsrate bestimmter Stoffe, insbesondere Metallionen, die beispielsweise aus einigen Legierungselementen hervorgehen können, in das in den Bauteilen geführte Trinkwasser festlegen. In der Vergangenheit wurde versucht, die Migrationsraten bestimmter aus Legierungselementen hervorgehender Metallionen durch verschiedene Maßnahmen gering zu halten. Die europäische Patentanmeldung 1 652 946 A1 beispielsweise beschreibt eine Kupferlegierung, der 0,01 bis 5,0 Gew.-% Silizium und/oder 0,01 bis 5,0 Gew.-% Aluminium zulegiert wird. Durch die Zulegierung mindestens eines der beiden Elemente soll die Abgabe von Metallionen deutlich verringert werden.

Eine andere Möglichkeit, die Migrationsrate von aus Legierungselementen hervorgehenden Metallionen zu senken, besteht darin, den Anteil des betreffenden Elements, beispielsweise Nickel oder Blei, an der Legierung, gegebenenfalls auf den Wert Null, abzusenken. Durch diese Maßnahme werden jedoch auch die durch die Zulegierung des entsprechenden Elements gewünschten, vorteilhaften Effekte abgeschwächt bzw. zunichte gemacht. Die europäische Patentanmeldung 1 749 897 A1 offenbart ein Verfahren zur Herstellung von wasserführenden Gussteilen, bei dem an sich bekannte Legierungen nach dem Gießen eines Gussteils für 30 Minuten bei Temperaturen zwischen 400 und 800 °C geglüht und anschließend bei Raten von 10 bis 100 K pro Stunde gekühlt werden. Durch diese Behandlung soll die Migrationsrate von Kupfer-, Blei- und Nickelionen zumindest langfristig reduziert werden.

Allerdings kann durch das Zulegieren von Legierungsbestandteilen das Gefüge der Bauteillegierung durch die in Verbindung mit den anderen Legierungselementen auftretenden Kombinationseffekte negativ beeinflusst werden. Somit kann eine verminderte Migrationsrate bestimmter aus Legierungselementen hervorgehender Metallionen mit anderen nachteilig geänderten Eigenschaften des fertigen Bauteils, beispielsweise verschlechterten Umformeigenschaften oder verringerter Zerspanbarkeit, einhergehen. Eine solche nachteilige Beeinflussung kann auch durch eine spezielle Wärmebehandlung während des Herstellungsprozesses bewirkt werden.

Aus der japanischen Patentanmeldung JP 06193758 ist darüber hinaus ein Verfahren zur Beschichtung eines Wasserhahns mit einer Zinn/Nickel-Beschichtung zumindest im Bereich des Ventilsitzes bekannt. In welchen Mengenverhältnissen Zinn und Nickel abgeschieden werden, wird nicht offenbart.

Der vorliegenden Erfindung liegt daher die Aufgabe zu Grunde, ein Verfahren zur Herstellung eines beschichteten Bauteils für fluidführende Gewerke anzugeben, mit dem die Korrosionsbeständigkeit der Bauteile verbessert und die Migrationsrate von Metallionen aus dem Bauteil reduziert werden kann, ohne andere für die Herstellung des Bauteils notwendige Eigenschaften negativ zu beeinflussen. Darüber hinaus liegt der vorliegenden Erfindung die Aufgabe zu Grunde, ein beschichtetes Bauteil anzugeben, das eine verbesserte Korrosionsbeständigkeit und eine reduzierte Migrationsrate von Metallionen aufweist, wobei gleichzeitig eine kostengünstige Herstellung ermöglicht wird.

Die Aufgabe wird durch ein Verfahren nach Patentanspruch 1 gelöst. Gemäß einer ersten Lehre der vorliegenden Erfindung wird das Bauteil in einem Bad mit einer Nickelsalze und Zinnsalze aufweisenden Elektrolytlösung zumindest teilflächig beschichtet, so dass die Beschichtung eine Zusammensetzung von 65 ± 8 Gew.-% Zinn mit dem Rest Nickel sowie unvermeidlichen Verunreinigungen aufweist.

Es hat sich überraschenderweise gezeigt, dass durch das Aufbringen einer Zinn/Nickel-Beschichtung auf die Bauteile für fluidführende Gewerke in einem elektrolytischen Bad den Bauteilen sowohl eine höhere Korrosionsbeständigkeit verliehen als auch die Migration von Metallionen in das Fluid gehemmt werden kann. Vorteilhafte Eigenschaften des Bauteils als Trägermaterial der Beschichtung, beispielsweise die Umformeigenschaften oder die Zerspanbarkeit, werden durch die elektrolytisch aufgetragene Zinn/Nickel-Beschichtung kaum beeinflusst, da diese ebenfalls eine hohe Duktilität aufweist. Die Zinn/Nickel-Beschichtung fungiert im Wesentlichen als Barriere gegenüber der fluidführenden Umgebung. Dies hat den Vorteil, dass konventionelle Materialien für die Bauteile verwendet werden können, deren Migrationseigenschaften und Korrosionsbeständigkeit durch die Beschichtung wesentlich verbessert werden. Ferner werden spezielle Behandlungen, beispielsweise Wärmebehandlungen zur Minderung der Migrationsrate, überflüssig, da die Zinn/Nickel-Beschichtung als Barriere zwischen den mit der Zinn/Nickel-Beschichtung versehenen Oberflächen des Bauteils und dem in dem Bauteil zu führenden Fluid, beispielsweise Trinkwasser, dient. Die Zinn/Nickel-Beschichtung hemmt beispielsweise Korrosionsangriffe, wie sie beispielsweise durch Sauerstoffoxidation verursacht werden können, an den mit der Zinn/Nickel-Beschichtung versehenen Oberflächen des Bauteils. Weiterhin weist die Zinn/Nickel-Beschichtung eine geringere Durchlässigkeit gegenüber insbesondere aus Legierungselementen hervorgehenden Metallionen wie Kupfer, Blei oder Nickel auf. Das Bauteil für fluidführende Gewerke kann dabei teilflächig mit der Zinn/Nickel-Beschichtung versehen werden. Um den Aufwand zur Beschichtung so gering wie möglich zu halten, werden vorzugsweise nur die mit dem zu führenden Fluid in Kontakt kommenden Oberflächen des Bauteils beschichtet. Es ist jedoch auch möglich, das Bauteil vollflächig mit der Zinn/Nickel-Beschichtung zu versehen. Auf diese Weise können beispielsweise materialschädigende Korrosionsangriffe auch an den Flächen, die nicht mit dem in dem Bauteil zu führenden Fluid in Kontakt kommen, gehemmt werden.

Die Rate der elektrolytischen Abscheidung während der Beschichtung ist vorzugsweise niedrig. Dadurch können auch aufgeraute oder auf andere Weise profilierte Oberflächen gleichmäßig mit der Zinn/Nickel-Beschichtung versehen werden. Insbesondere sind bei einer niedrigen Rate der elektrischen Abscheidung auch die Oberflächen von Vertiefungen oder Ausnehmungen in der Oberfläche des Bauteils gleichmäßig beschichtbar.

Ein weiterer Vorteil der teilflächigen Zinn/Nickel-Beschichtung eines Bauteils für fluidführende Gewerke, ist, dass der Herstellungsprozess der Bauteile bis zu dem Punkt, an dem die Zinn/Nickel-Beschichtung vorgenommen wird, nicht geändert werden muss. Es können also konventionelle Materialien für die Herstellung sehr korrosionsbeständiger und migrationsarmer Bauteile verwendet werden. Die im Gegensatz zu konventionellen Bauteilen auftretenden, zusätzlichen Herstellkosten beschränken sich auf die Beschichtung der Bauteile und fallen entsprechend niedrig aus.

In einer bevorzugten Ausführungsform des Verfahrens beträgt das Molverhältnis Zinn zu Nickel der Beschichtung 1:1. Bei dieser Zinn/Nickel-Verbindung handelt es sich um eine Einphasenverbindung mit einer dicht gepackten hexagonalen Kristallstruktur, die einen hohen Härtegrad aufweist.

Gemäß der vorliegenden Erfindung enthält die Elektrolytlösung des Bads Nickelchlorid, Zinnchlorid und Ammoniumfluorid und weist einen pH-Wert von 4 bis 4,5 auf. Durch die verwendeten Salze und die saure Umgebung wird die Abscheidung von Ionen aus der Elektrolytlösung am Bauteil begünstigt.

Ferner kann das Bad auf einer Temperatur von etwa 60 bis 70 °C gehalten werden, so dass der Beschichtungsprozess wegen der gegenüber Raumtemperatur erhöhten thermischen Energie beschleunigt wird. Ferner kann durch die Temperatur auch der pH-Wert beeinflusst werden.

Das Bauteil kann aus Kupfer oder einer Kupferlegierung, beispielsweise Rotguss oder Messing, einer Stahllegierung, Temperguss, Zinkdruckguss oder einer Kombination davon ausgebildet sein. Die vorstehend genannten Materialien sind dafür geeignet, mit einer Zinn/Nickel-Beschichtung versehen zu werden. Gleichwohl stellen diese vorstehend genannten Materialien keine abschließende Aufzählung dar. Weiterhin sind diese Materialien aus der herkömmlichen Herstellung von Bauteilen für fluidführende Gewerke bekannt. Somit kann auf bereits etablierte Herstellungsverfahren zurückgegriffen werden, die lediglich um den Beschichtungsprozess erweitert werden müssen.

Schließlich wird vorzugsweise mit dem erfindungsgemäßen Verfahren ein Bauteil eines fluidführenden Gewerks hergestellt, wobei das Fluid hohe Reinheitsanforderungen erfüllen muss. Bei trinkwasserführenden Gewerken beispielsweise sind besonders strenge Anforderungen an die Migration von Elementen aus den Bauteilen in das Trinkwasser zu erfüllen. Darüber hinaus sind die Bauteile über lange Zeiträume einer korrosiven Umgebung ausgesetzt. Ähnliche oder strengere Anforderungen sind von Bauteilen fluidführender Gewerke auch aus industriellen Anwendungen bekannt, beispielsweise Bauteile von Gewerken zur Führung von Prozesswasser.

Gemäß der vorliegenden Erfindung wird die Aufgabe auch durch ein beschichtetes Bauteil für fluidführende Gewerke gelöst, wobei das beschichtete Bauteil nach einem wie vorstehend beschriebenen Verfahren hergestellt ist und eine Zinn/Nickel-Beschichtung mit einem Zinn-Anteil von 65 ± 8 Gew.-%, mit dem Rest Nickel sowie unvermeidlichen Verunreinigungen aufweist.

Die erfindungsgemäße Zinn/Nickel-Beschichtung verleiht dem Bauteil eine hohe chemische Beständigkeit, eine hohe Widerstandsfähigkeit gegen Korrosionsangriffe und gute Barriereeigenschaften gegenüber der Migration von Elementen, insbesondere Metallionen. Ferner beeinflusst die Zinn/Nickel-Beschichtung die Materialeigenschaften des Bauteils nur unwesentlich. So ist die Verformbarkeit des Bauteils nicht beeinträchtigt. Aufgrund der Duktilität der erfindungsgemäßen Beschichtung wird diese auch bei einer Umformung des beschichteten Bauteils nicht beschädigt. Die erfindungsgemäße Zinn/Nickel-Beschichtung bewirkt weiterhin, dass die mit ihr versehenen Oberflächen der Bauteile sehr glatt ausgebildet werden können. Da die Zinn/Nickel-Beschichtung auch eine hohe Abriebresistenz aufweist, können die erfindungsgemäß beschichteten Bauteile dort eingesetzt werden, wo Oberflächen unter Ausbildung von Reibungskräften gegeneinander bewegt werden. Beispielsweise kann in einem fluidführenden Gewerk ein Kugelhahn mit dem darin angeordneten Kugelküken mit der Zinn/Nickel-Beschichtung versehen werden. Das Kugelküken in dem Kugelhahn kann auf Grund der vorteilhaften Eigenschaften der Zinn/Nickel-Beschichtung leichter betätigt werden.

Die Beschichtung weist vorzugsweise ein Molverhältnis von Zinn zu Nickel von 1:1 auf. Die resultierende Beschichtung hat überwiegend eine hexagonale Kristallstruktur vom Typ NiAs (B8₁). Eine Beschichtung mit einer vollkommenen Ausbildung einer dicht gepackten hexagonalen Kristallstruktur vom Typ NiAs (B8₁) ist nach fachmännischem Verständnis nicht möglich, da ein Kristallgefüge durch unterschiedliche Einflüsse, beispielsweise Substitutionsatome oder Gitterversetzungen, mit vertretbarem Aufwand niemals einen vollkommenen Zustand annehmen kann. Dennoch wird angestrebt, die Zinn/Nickel-Beschichtung so vollkommen wie möglich mit einer hexagonalen Kristallstruktur vom Typ NiAs (B8₁) auszubilden, da hierdurch die vorteilhaften Wirkungen der Beschichtung verstärkt werden.

Gemäß der vorliegenden Erfindung ist das Bauteil aus Kupfer, einer Kupferlegierung wie beispielsweise Rotguss oder Messing, einer Stahllegierung, Temperguss, Zinkdruckguss oder einer Kombination davon ausgebildet. Somit können weiterhin bereits etablierte Materialien und Verfahren für die Herstellung des Bauteils verwendet werden. Die Anforderungen an die Materialien der Bauteile hinsichtlich Korrosionsbeständigkeit oder Migrationsverhalten von Metallionen können ferner reduziert werden, da gegebenenfalls auftretende Effekte durch die Zinn/Nickel-Beschichtung kompensierbar sind.

Weiterhin kann das Bauteil vorteilhaft als Fitting, Armatur, Rohr, Muffe, Pressverbinder, Dachrinne oder Ablaufrinne ausgebildet sein. Insbesondere bei Fittings, Armaturen, Rohre, Muffen und Pressverbinder treten die Eigenschaften des Bauteils hinsichtlich Korrosionsbeständigkeit, Migration, Umformbarkeit in den Vordergrund, da die Bauteile häufig in trinkwasserführenden Gewerken eingesetzt werden. Die Auflistung der möglichen körperlichen Ausgestaltungen des Bauteils ist allerdings nicht als abschließend anzusehen. Beispielsweise ist es auch denkbar Dach- und Fassadenabdeckungen mit einer entsprechenden Beschichtung zu versehen, um Migration von Metallionen in beispielsweise das ablaufende Regenwasser zu vermeiden.

Schließlich ergeben sich besondere Vorteile, wenn das Bauteil gemäß einer nächsten Ausführungsform ein Bauteil eines fluidführenden Gewerks ist, wobei das Fluid hohe Reinheitsanforderungen erfüllen muss. Durch ein entsprechendes Bauteil können, wie bereits ausgeführt, neben einer kostengünstigen Herstellung auch hohe Anforderungen hinsichtlich der Korrosionsbeständigkeit, Migration und Umformbarkeit gleichzeitig erfüllt werden.

Im Folgenden wird die Erfindung an Hand eines Ausführungsbeispiels mit Bezug auf die beiliegende Zeichnung näher erläutert. In der Zeichnung zeigen:
- Fig. 1: einen Ausschnitt einer schematischen Darstellung der Zinn/Nickel-Atomanordnung in der dicht gepackten hexagonalen Kristallstruktur, aus der die erfindungsgemäße Zinn/Nickel-Beschichtung überwiegend ausgebildet ist,
- Fig. 2: einen Ausschnitt der schematischen Kristallstruktur aus Fig. 1 mit den Gitterparametern *a* und c und
- Fig. 3a)-3d): perspektivische Ansichten von Ausführungsbeispielen von Bauteilen für trinkwasserführende Gewerke, die mit der erfindungsgemäßen Zinn/Nickel-Beschichtung versehen werden können.

Gemäß einem Ausführungsbeispiel des erfindungsgemäßen Verfahrens wird ein Werkstück aus einer Kupferlegierung in ein Bad eingebracht, das 250 g/l Nickel(II)-Chlorid (NiCl₂), 50 g/l Zinn (II)-Chlorid (SnCl₂) und 40 g/l Ammoniumfluorid (NH₄F) aufweist. Das Bad hat einen pH-Wert von 4 bis 4,5 und wird auf eine Temperatur von etwa 60 °C bis 70 °C erwärmt. Es wird eine Spannung zwischen Bad und Werkstück angelegt, so dass aufgrund des sich einstellenden Stromflusses auf der Werkstückoberfläche eine Nickel/Zinn Beschichtung abgeschieden wird.

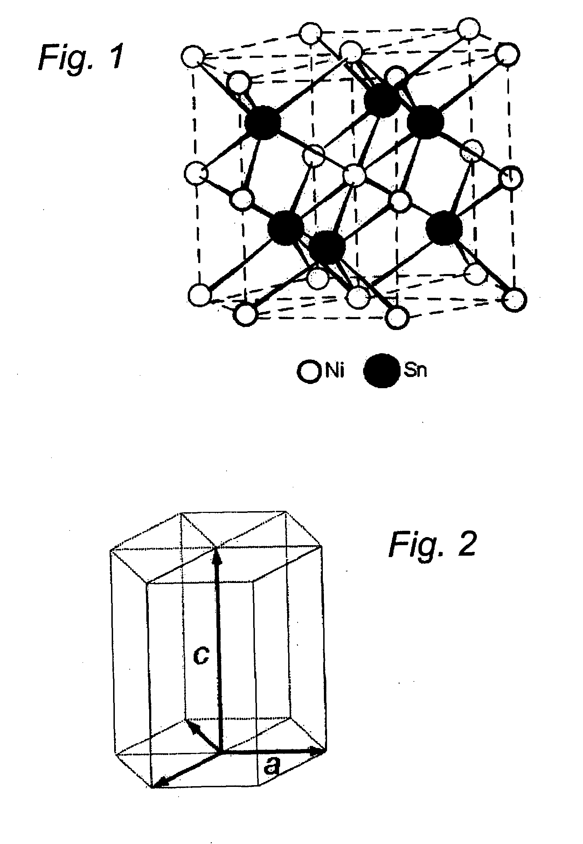

Die auf diese Weise hergestellte Zinn/Nickel-Beschichtung weist eine Atomanordnung auf, wie sie in Fig. 1 gezeigt ist. Die großen, schattiert gefüllten Kugeln stellen die Zinnatome dar, während die kleinen, hohlen Kugeln die Nickelatome repräsentieren. Die Zusammensetzung der Zinn/Nickel-Beschichtung an den so mit der Zinn/Nickel-Beschichtung versehenen Oberflächen des Werkstücks wurde mittels eines Verfahrens der energiedispersiven Röntgenspektroskopie zu 65 Gew.-% Zinn und 35 Gew.-% Nickel ermittelt. Das Molverhältnis von Zinn zu Nickel beträgt etwa 1:1. Ferner wurde eine Strukturanalyse mittels Röntgenstrahlbeugung durchgeführt. Die Gitterparameter, wie sie aus Fig. 2 hervorgehen, wurden zu *a* = 4,173 Angström und c = 5,123 Angström bestimmt. Diese Ergebnisse bestätigen, dass die Zinn/Nickel-Beschichtung überwiegend eine dicht gepackte hexagonale, wie in Fig. 1 gezeigte, Kristallstruktur des Typs NiAs (B8₁) (Rotnickelkies-Typ) aufweist.

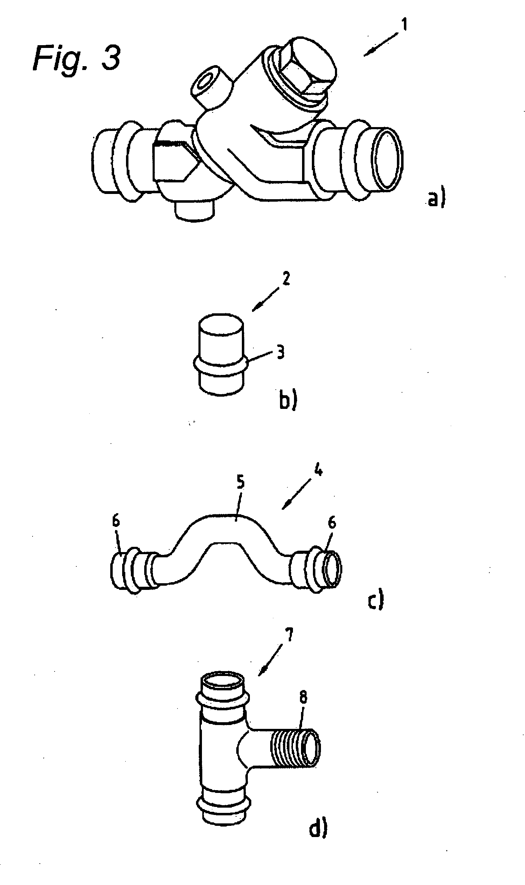

In Fig. 3a bis 3d sind nun erfindungsgemäße Ausführungsbeispiele der Bauteile für trinkwasserführende Gewerke (Fittings, Armaturen und Rohre) dargestellt, die mit einer Zinn/Nickel-Beschichtung versehen sind. Die Beschichtung ist nach dem gerade beschriebenen Verfahren auf die Bauteile aufgebracht. So zeigt Fig. 3a ein Ventilgehäuse 1, welches beispielsweise aus einer stranggegossenen Stange einer Kupferlegierung durch Strangpressen eines dickwandigen Rohres oder einer Vollstange einer Kupferlegierung mit anschließendem Warmpressen, Sandguss, Kokillenguss oder Gesenkschmieden herstellbar ist. Anschließend kann das auf konventionelle Weise hergestellte Bauteil mit der erfindungsgemäßen Zinn/Nickel-Beschichtung (nicht dargestellt) versehen werden. Die gute Umformbarkeit oder die gute Zerspanbarkeit, die das Bauteil vor der Beschichtung aufweist, werden durch die Zinn/Nickel-Beschichtung nicht beeinträchtigt. Somit ist gewährleistet, dass die nach dem zuvor genannten Verfahren hergestellten Bauteile selbst nach der Zinn/Nickel-Beschichtung einfach bearbeitet werden können.

Bei Versuchen, welche den Langzeiteinsatz entsprechender Bauteile in fluidführenden Gewerken, welche hohe Reinheitsanforderungen erfüllen müssen, wurden trinkwasserführende Gewerke simuliert. Es zeigte sich, dass die erfindungsgemäßen Bauteile eine hervorragende Korrosionsbeständigkeit und eine besonders geringe Migration von Metallionen in das Trinkwasser aufweisen. Dies unterstreicht die Eignung der erfindungsgemäßen Bauteile auch für andere Fluide führende Gewerke.

In Fig. 3b ist eine einfache Endkappe 2 dargestellt. Endkappen, die häufig eine O-Ringnut 3 aufweisen können, werden bisher auf Grund des notwendigen Tiefziehverfahrens zumeist aus reinem Kupfer hergestellt. Die Wahl reinen Kupfers kann jedoch bei der späteren Verwendung einer solchen Endkappe 2 zu einer erhöhten Migrationsrate von Kupferionen in das in dem Gewerk geführte Fluid führen. Ferner ist reines Kupfer anfällig für Korrosionsangriffe. Mit dem erfindungsgemäßen Beschichtungsverfahren kann die Endkappe 2 aus reinem Kupfer wie die übrigen Bauteile trinkwasserführender Gewerke mit einer zinn/Nickel-Beschichtung (nicht dargestellt) versehen werden. Die Migrationsrate von Kupferionen, aber auch von anderen Metallionen, wird durch die Beschichtung gesenkt. Ferner ist das mit der Zinn/Nickel-Beschichtung versehene Bauteil deutlich korrosionsresistenter als vor der Beschichtung.

Fig. 3c zeigt in einer perspektivischen Darstellung ein gebogenes Rohr 4 mit einem Überbogen 5 und beidseitigen Anschlussenden 6. Das dargestellte Rohr 4 kann aus einem längsnahtgeschweißten Rohr, das wiederum aus einem kalt- und/oder warmgewalzten Blech erzeugt wurde, oder aus einem kaltgezogenen Rohr hergestellt werden. Durch das nachträgliche Beschichten mit der Zinn/Nickelbeschichtung muss das konventionelle Herstellungsverfahren, das Kalt- und/oder Warmumformschritte umfassen kann, nicht geändert werden. Bei der Herstellung der beschichteten Bauteile kann so jeweils das wirtschaftlich kostengünstigste Verfahren zur Herstellung gewählt werden. Der Überbogen 5 in diesem Beispiel ist dann beispielsweise durch Biegen des Rohres 4 formbar. Die Anschlussstücke 6 werden vorzugsweise vor dem Biegen entweder durch einen einfachen Stauch- und Aufweitungsschritt hergestellt oder mittels Innenhochdruckumformen in das Rohr 4 eingebracht. Danach kann das gebogene Rohr 4 mit der Zinn/Nickel-Beschichtung versehen werden.

Ein weiteres typisches bisher zumeist aus einer Rotguss-Legierung hergestelltes Bauteil für trinkwasserführende Gewerke stellt das in Fig. 3d perspektivisch dargestellte T-Stück 7 dar. Auch das T-Stück 7 weist an seinen beiden Enden des Querbalkens des T's Anschlussstücke mit O-Ringnuten auf, welche entweder durch einen nachträglichen Aufweitungsprozess oder bereits bei Herstellung des T-Stücks 7 mittels Innenhochdruckumformen formbar sind. In der Regel wird ein kaltgezogenes Rohr auf Länge geschnitten und nach einem eventuellen Zwischenglühen in einem Werkzeug durch Innenhochdruckumformen umgeformt. In dem so hergestellten T-Stück-Rohling kann das Gewinde 8 beispielsweise durch Rollieren eingebracht werden. Im Anschluss an diese konventionelle Herstellungsweise kann das T-Stück 7 mit der erfindungsgemäßen Zinn/Nickel-Beschichtung versehen werden.

## Patentansprüche

1. Verfahren zur Herstellung eines beschichteten Bauteils für fluidführende Gewerke, bei dem wenigstens die mit dem zu führenden Fluid in Kontakt kommenden Oberflächen des Bauteils beschichtet werden, wobei das Bauteil aus Kupfer, einer Kupferlegierung, einer Stahllegierung, Temperguss, Zinkdruckguss oder einer Kombination davon ausgebildet ist,
**dadurch gekennzeichnet, dass** das Bauteil in einem Bad mit einer Nickelsalze und Zinnsalze aufweisenden Elektrolytlösung zumindest teilflächig beschichtet wird, wobei die Elektrolytlösung des Bads Nickelchlorid, Zinnchlorid und Ammoniumfluorid enthält und einen pH-Wert von 4 bis 4,5 aufweist, so dass die Beschichtung eine Zusammensetzung von 65 ± 8 Gew.-% Zinn mit dem Rest Nickel sowie unvermeidlichen Verunreinigungen aufweist, wobei eine Spannung zwischen Bad und Bauteil angelegt wird, so dass aufgrund des sich einstellenden Stromflusses auf der Bauteiloberfläche eine Zinn/Nickel-Beschichtung abgeschieden wird.

2. Verfahren nach Anspruch 1,
**dadurch gekennzeichnet, dass** das Molverhältnis von Zinn und Nickel der Beschichtung 1:1 beträgt.

3. Verfahren nach Anspruch 1 oder 2,
**dadurch gekenntzeichnet, dass** das Bad auf einer Temperatur von etwa 60 bis 70 °C gehalten wird.

4. Beschichtetes Bauteil für fluidführende Gewerke,
**dadurch gekennzeichnet, dass** es nach einem in den Ansprüchen 1 bis 3 beschriebenen Verfahren hergestellt ist, eine Zinn/Nickel-Beschichtung mit einem Zinn-Anteil von 65 ± 8 Gew.-%, mit dem Rest Nickel sowie unvermeidlichen Verunreinigungen aufweist und wenigstens die mit dem zu führenden Fluid in Kontakt kommenden Oberflächen des Bauteils beschichtet sind.

5. Beschichtetes Bauteil nach Anspruch 4,
**dadurch gekennzeichnet, dass** die Beschichtung ein Molverhältnis von Zinn zu Nickel von 1:1 aufweist.

6. Beschichtetes Bauteil nach Anspruch 4 oder 5,
**dadurch gekennzeichnet, dass** das Bauteil aus Kupfer, einer Kupferlegierung, einer Stahllegierung, Temperguss, Zinkdruckguss oder einer Kombination davon ausgebildet ist.

7. Beschichtetes Bauteil nach einem der Ansprüche 4 bis 6,
**dadurch gekennzeichnet, dass** das Bauteil ein Fitting, eine Armatur, ein Rohr, eine Muffe, ein Pressverbinder, eine Dachrinne oder eine Ablaufrinne ist.

## Claims

1. Method for the production of a coated component for fluid-conducting assembly sections, in which at least the surfaces of the component coming into contact with the fluid to be conducted are coated, wherein the component is made from copper, a copper alloy, a steel alloy, malleable iron, die-cast zinc or a combination thereof, **characterised in that** the component is coated on at least part of its surface in a bath with an electrolyte solution comprising nickel salt and tin salt, wherein the electrolyte solution in the bath contains nickel chloride, tin chloride and ammonium fluoride and has a pH value of 4 to 4.5, such that the coating has a composition of 65 ± 8% wt. tin with the remainder nickel and unavoidable impurities, wherein a voltage is applied between bath and component, such that as a result of the current flow occurring a tin/nickel coating is deposited on the component surface.

2. Method according to Claim 1, **characterised in that** the molar ratio of tin and nickel of the coating is 1:1.

3. Method according to Claim 1 or 2, **characterised in that** the bath is maintained at a temperature of approximately 60 to 70°C.

4. Coated component for fluid-conducting assembly sections, **characterised in that** it is manufactured according to a method described in Claims 1 to 3, it has a tin/nickel coating with a tin content of 65 ± 8% wt., with the remainder nickel and unavoidable impurities, and at least the surfaces of the component coming into the contact with the fluid to be conducted are coated.

5. Coated component according to Claim 4, **characterised in that** the coating has a molar ratio of tin to nickel of 1:1.

6. Coated component according to Claim 4 or 5, **characterised in that** the component is made from copper, a copper alloy, a steel alloy, malleable iron, die-cast zinc or a combination thereof.

7. Coated component according to one of Claims 4 to 6, **characterised in that** the component is a fitting, a valve, a pipe, a pipe coupling, a press connector, a roof gutter or a drain gutter.

## Revendications

1. Procédé de fabrication d'un composant revêtu pour des travaux impliquant le transport de fluides, dans lequel au moins les surfaces du composant venant en contact avec le fluide à transporter sont revêtues, dans lequel le composant est formé de cuivre, d'un alliage de cuivre, d'un alliage d'acier, de fonte malléable, de zinc coulé sous pression ou d'une combinaison de ceux-ci,
**caractérisé en ce que**
le composant est, au moins partiellement, revêtu en surface dans un bain constitué d'une solution électrolytique présentant des sels de nickel et des sels d'étain, la solution électrolytique du bain contenant du chlorure de nickel, du chlorure d'étain et du fluorure d'ammonium et présentant un pH de 4 à 4,5, de sorte que le revêtement possède une composition de 65 ± 8 % en poids d'étain et du reste de nickel ainsi que d'impuretés inévitables, et une tension étant appliquée entre le bain et le composant de sorte qu'en raison du flux de courant qui se présente alors, un revêtement d'étain/nickel vienne se déposer sur la surface du composant.

2. Procédé selon la revendication 1,
**caractérisé en ce que**
le rapport molaire entre l'étain et le nickel du revêtement est de 1:1.

3. Procédé selon la revendication 1 ou 2,
**caractérisé en ce que**
le bain est maintenu à une température d'environ 60 à 70 °C.

4. Composant revêtu pour des travaux impliquant le transport d'un fluide,
**caractérisé en ce que**
il est fabriqué selon un quelconque des procédés décrit dans les revendications 1 à 3, **en ce qu'**il présente un revêtement d'étain/nickel avec un taux de 65 ± 8 % en poids d'étain, du reste de nickel ainsi que d'impuretés inévitables et **en ce qu'**au moins les surfaces du composant venant en contact avec le fluide à transporter sont revêtues.

5. Composant revêtu selon la revendication 4,
**caractérisé en ce que**
le revêtement présente un rapport molaire entre l'étain et le nickel de 1:1.

6. Composant revêtu selon la revendication 4 ou 5,
**caractérisé en ce que**
le composant est formé de cuivre, d'un alliage de cuivre, d'un alliage d'acier, de fonte malléable, de zinc coulé sous pression ou d'une combinaison de ceux-ci.

7. Composant revêtu selon l'une quelconque des revendications 4 à 6,
**caractérisé en ce que**
le composant est un raccord, un accessoire de tuyauterie, un tuyau, un manchon, un raccord à sertir, une gouttière ou une goulotte.
